# EUROPÄISCHE PATENTSCHRIFT

(11) **EP 1 098 798 B1**
(45) Veröffentlichungstag und Bekanntmachung des Hinweises auf die Patenterteilung: **03.09.2003**
(21) Anmeldenummer: 99942798.2
(22) Anmeldetag: 22.07.1999
(51) Int. Cl.: B60T 8/40, B60T 13/14, F15B 1/04, B60T 17/02, B60T 17/06

(54) **HYDRAULISCHE ANSTEUEREINHEIT FÜR EINE KRAFTFAHRZEUGBREMSANLAGE**
HYDRAULIC CONTROL UNIT FOR A MOTOR VEHICLE BRAKING SYSTEM
UNITE DE COMMANDE HYDRAULIQUE DESTINEE A UN SYSTEME DE FREINAGE D'UN VEHICULE AUTOMOBILE

(30) Priorität: 24.07.1998 DE 19833410
(43) Veröffentlichungstag der Anmeldung: 16.05.2001
(73) Patentinhaber: LUCAS INDUSTRIES PUBLIC LIMITED COMPANY, Solihull B90 4LA (GB)
(72) Erfinder: MOHR, Kurt, D-56283 Halsenbach (DE); OLIVERI, Salvatore, D-56341 Filsen (DE); WAGNER, Thomas, D-56179 Vallendar (DE)
(74) Vertreter: Schmidt, Steffen J., Dipl.-Ing.
(86) Internationale Anmeldenummer: EP9905249
(87) Internationale Veröffentlichungsnummer: WO00005114

(56) Entgegenhaltungen:
- DE-A- 3 133 111
- DE-A- 4 023 706
- DE-A- 4 107 625
- DE-A- 4 120 665
- DE-A- 4 301 287
- DE-A- 19 621 786

## Beschreibung

Die vorliegende Erfindung betrifft eine hydraulische Ansteuereinheit für eine Kraftfahrzeugbremsanlage, insbesondere für eine Kraftfahrzeugbremsanlage mit einer durch eine elektronische Steuereinheit ansteuerbaren ein unter Druck stehendes Hydraulikfluid liefernden Pumpe, die das Hydraulikfluid für wenigstens eine mit einem Fahrzeugrad gekoppelte Bremseinrichtung bereitstellt, einem ersten Reservoir für druckloses Hydraulikfluid, das der Pumpe eingangsseitig zugeordnet ist, und einem zweiten Reservoir für unter Druck stehendes Hydraulikfluid, das der Pumpe ausgangsseitig zugeordnet ist, wobei die Pumpe, das erste und das zweite Reservoir in einem gemeinsamen Gehäuse als elektrohydraulische Baueinheit integriert angeordnet sind.

Im Stand der Technik sind als Ausgestaltungen eines zweiten Reservoirs Druckspeicher bekannt, die als Gaskolbenspeicher, als Gasmembranspeicher oder als Gas-Multilayer-Membranspeicher oder als Federkolbenenspeicher ausgestaltet sind. Dabei variiert bei gleichem Nutzvolumen die Baugröße der jeweiligen Druckspeicher erheblich. Darüber hinaus bestehen für Druckspeicher mit Gasfüllung Probleme hinsichtlich der Temperaturabhängigkeit und der Dichtigkeit im Langzeitverhalten. Weitere Nachteile sind bei Gas-Multilayer-Membranspeichern das erhebliche Gewicht und die hohen Kosten. Bei Federkolbenspeichern besteht das Problem der Abnutzung der Dichtung zwischen dem Zylinder und dem bewegten Kolben. Alle diese Probleme begrenzen die Lebensdauer der Druckspeicher.

Bei den im Stand der Technik bekannten elektrohydraulischen Bremsanlagen kommen handelsübliche Gas- bzw. Membranspeicher zur Verwendung, die an einer Außenseite der Hydraulikeinheit angeschraubt werden. Dadurch baut die Hydraulikeinheit unförmig, so daß in nicht unkritischer Weise Einbauraumprobleme entstehen.

Aus der JP-09086362 A ist eine Steuervorrichtung für Bremsfluid mit einer unter Druck stehendes Hydraulikfluid liefernden Pumpe bekannt. Die Pumpe ist durch einen Motor antreibbar und eingangsseitig ist ihr ein erstes Reservoir für druckloses Hydraulikfluid zugeordnet. Ausgangsseitig ist der Pumpe ein zweites Reservoir für unter Druck stehendes Hydraulikfluid zugeordnet. In einer Zeichnung der JP-09086362 A sind die Pumpe und das erste und zweite Reservoir sowie insbesondere auch der Motor zu einem Schaltblock zusammengefaßt. In der JP-09086362 A findet sich kein Hinweis, daß der genannte Schaltblock einem Gehäuse gleichzusetzen ist. Bei bekannten Kraftfahrzeugbremsanlagen weist der die Pumpe antreibende Motor ein eigenes Motorgehäuse auf, das zumeist aus Kunststoff hergestellt ist. Dieses Motorgehäuse ist an ein Pumpengehäuse angebracht, das in der Regel aus einer Metall-Legierung gefertigt ist. Da bereits der Motor und die Pumpe zwei einzelne Gehäuse aufweisen, ist es für einen Fachmann der Kraftfahrzeugbremsentechnik abwegig, den Schaltblock einem Gehäuse gleichzusetzen.

Aus der Druckschrift Leichner, K.H.: "Fahrzeuggerechte Speichersysteme und ihre Einsatzbedingungen", in O + P Ölhydraulik und Pneumatik, Vol. 36, 1992, Nr. 8, S.498-501 ist ein Metallbalg-Speicher unter Gasvorspannung beschrieben, der in der Kfz-Industrie einsetzbar ist. In dieser Druckschrift wird die Ausführung eines derartigen Metallbalg-Speichers im Vergleich zu Membranspeichern als heute noch beachtlich schwer beurteilt.

Aus der US 4,858,898 ist ein Druckspeicher für ein Fahrzeug bekannt, der insbesondere als Federvorrichtung vorgesehen ist. Bei diesem Druckspeicher wird Hydraulikfluid gegen einen Federbalg aus Metall gefördert, der eine Gaskammer einschließt. Das in der Gaskammer eingeschlossene Gas wird dabei komprimiert und bildet eine Gegenkraft für das Hydraulikfluid.

Aus der DE 41 20 665 A1 ist eine elektromotorisch angetriebene Hydraulikpumpe bekannt, bei der eine Steuerungsvorrichtung, ein Elektromotor, ein hydraulischer Pumpenteil, ein als erstes Reservoir für druckloses Hydraulikfluid dienender Tank, ein Filter und ein als zweites Reservoir für unter Druck stehendes Hydraulikfluid dienender Resonator in einem Gehäuse untergebracht sind.

Die DE 196 21 786 A1 offenbart eine elektronisch steuerbare Fahrzeugbremsanlage für ein Kraftfahrzeug, die einen Druckspeicher aufweist, dessen Gehäusewandung zumindest teilweise durch einen Faltenbalg gebildet ist.

Der Erfindung liegt die Aufgabe zugrunde, die eingangs genannte hydraulische Ansteuereinheit derart weiterzubilden, daß die bei einer derartigen Einheit auftretenden Einbauraumprobleme vermieden werden.

Zur Lösung dieser Aufgabe wird eine hydraulische Ansteuereinheit für eine Kraftfahrzeugbremsanlage mit den Merkmalen des Anspruchs 1 vorgeschlagen.

Durch die erfindungsgemäße Ansteuereinheit wird zum einen eine erhebliche Gewichtseinsparung erreicht, da eine separate Außenwand des Druckspeichers wegfällt. Andererseits ermöglicht die Integration zweier Funktionen (Speicherung potentieller Energie und Umschließung des Fluids) in einem Bauteil eine erhebliche Vereinfachung der Gesamtanordnung. Darüber hinaus werden bewegte Dichtungen vermieden, die aufgrund von Reibung verschleißen können. Da Leitungswege entfallen oder erheblich verkürzt sind, ist auch eine Gewichts und Montageaufwandsverringerung erzielt.

Durch die Integration des ersten Reservoirs und dem damit verbundenen Wegfall der Rücklauf- und Saugleitung besteht des weiteren der Vorteil, daß sich der Ansaugweg zur Pumpe nicht nur erheblich kürzer, sondern vor allem mit einem erheblich größeren Ansaugquerschnitt ausgestalten läßt, woraus ein verbessertes Saugverhalten der Pumpe, insbesondere bei niedrigen Temperaturen, resultiert, das zur Steigerung der Leistungsfähigkeit der elektrohydraulischen Bremsanlage beiträgt.

Erfindungsgemäß ist das zweite Reservoir ein Hydraulikdruckspeicher, in den das Hydraulikfluid durch die Pumpe gegen die Kraft einer Federanordnung hineinförderbar ist, wobei zumindest ein erster Teil der Federanordnung durch einen Faltenbalg, vorzugsweise aus Metall gebildet ist.

Erstaunlicherweise ist es möglich durch die erfindungsgemäße Ausgestaltung einen Raumbedarf zu erreichen, der kaum über oder sogar unter dem Raumbedarf eines herkömmlichen Gasdruckspeichers liegt.

Dennoch ist der erfindungsgemäße Druckspeicher nicht oder kaum temperaturabhängig und hat aufgrund fehlender bewegter Dichtungen keine Verschleißprobleme.

Vorzugsweise ist eine Wandung des Hydraulikdruckspeichers zumindest teilweise durch eine Ausnehmung in dem Gehäuse gebildet. Dabei wird gegenüber dem Stand der Technik erheblich Material und Gewicht eingespart.

Dabei ist der Faltenbalg an einem ersten Ende mit einem Deckel verbunden, der die Ausnehmung in dem Gehäuse verschließt und an einem zweiten Ende mit einem Boden verbunden ist.

Damit teilt der Faltenbalg die Ausnehmung in dem Gehäuse in zwei Bereiche, von denen ein erster (innerer oder äußerer) Bereich mit Gas gefüllt sein kann und ein zweiter (äußerer oder innerer) Bereich das zweite Reservoir für unter Druck stehendes Hydraulikfluid bildet. Das eingeschlossene Gas unterstützt die Federwirkung der Federanordnung.

Eine vorteilhafte Weiterbildung sieht vor, daß der Faltenbalg die Ausnehmung in dem Gehäuse in zwei Bereiche teilt, von denen ein erster (innerer oder äußerer) Bereich das erste Reservoir für druckloses Hydraulikfluid und ein zweiter (äußerer oder innerer) Bereich das zweite Reservoir für unter Druck stehendes Hydraulikfluid bildet. Diese Maßnahme erreicht eine besonders hohe Raumausnutzung.

In einer bevorzugten Ausführungsform der Erfindung ist eine erste in den ersten Bereich reichende Öffnung angeordnet, die diesen mit einem Überlaufgefäß verbindet.

Außerdem ist in dem Deckel eine zweite, in den ersten Bereich reichende Öffnung angeordnet, die diesen mit der Eingangsseite der Pumpe verbindet.

Schließlich ist in der Wandung der Ausnehmung eine dritte, in den zweiten Bereich reichende Öffnung angeordnet, die diesen mit der Ausgangsseite der Pumpe verbindet.

Vorzugsweise ist zwischen der dritten, in den zweiten Bereich reichenden Öffnung und der Ausgangsseite der Pumpe eine steuerbare Ventilanordnung angeordnet. Darüber hinaus können auch noch weitere Ventilanordnungen in die Ansteuereinheit integriert sein.

Außerdem ist eine Hydraulikfluidleitung zwischen dem drucklosen und dem unter Druck stehenden Bereich, vorzugsweise in dem Boden, angeordnet, in der sich ein Überdruckventil befindet, das bei einem vorbestimmten ersten Druckniveau in dem unter Druck stehenden Bereich eine fluidleitende Verbindung von dem unter Druck stehenden Bereich zu dem drucklosen Bereich herstellt und bei einem vorbestimmten zweiten Druckniveau in dem unter Druck stehenden Bereich die fluidleitende Verbindung von dem unter Druck stehenden Bereich zu dem drucklosen Bereich unterbricht. Damit fördert die Pumpe bei zu hohem Druck im Kreis.

Zur Erhöhung des erreichbaren Druckniveaus ist bevorzugt parallel zu dem ersten Teil der Federanordnung ein zweiter Teil der Federanordnung angeordnet, der die Wirkung des ersten Teils der Federanordnung unterstützt.

In einer ersten Ausführungsform der Erfindung ist der zweite Teil der Federanordnung eine als Druckfeder ausgebildete Schraubenfeder, die zwischen dem Boden und dem Deckel angeordnet ist.

Als eine Alternative dazu kann der zweite Teil der Federanordnung eine als Zugfeder ausgebildete Schraubenfeder sein, die zwischen dem Boden und der Wandung der Ausnehmung angeordnet ist.

Es versteht sich, daß die Anordnung der Schraubenfeder innerhalb oder außerhalb des Faltenbalges sowie die Ausbildung als Zug- oder Druckfeder gegenüber vorstehend beschriebenen Alternativen auch vertauscht sein kann.

Die maximale Expansion des Reservoirs für unter Druck stehendes Hydraulikfluid ist in beiden Fällen durch ein Anschlagglied begrenzt.

Die Pumpe ist mit einem von der elektronischen Steuereinheit (ECU) angesteuerten Elektromotor getrieblich gekoppelt.

Die vorstehend beschriebene hydraulische Ansteuereinheit ist zwar für eine Kraftfahrzeugbremsanlage beschrieben. Für einen Fachmann ist jedoch auch ohne weiteres ersichtlich, daß die erfindungsgemäße hydraulische Ansteuereinheit auch für andere Zwecke eingesetzt werden kann. So kann z.B. eine aus dem Dekkel, dem Boden, dem federnden Faltenbalg und oder der Schraubenfeder bestehende Unterbaugruppe in eine entsprechend ausgeformte Ausnehmung oder Bohrung in einem Gehäuse eingesetzt werden, in das auch noch andere Komponenten (z.B. Ventile oder dergl.) integriert sein können, aber nicht müssen. Dabei kann das Gehäuse als Formteil aus Metall oder Kunststoff gebildet sein.

Dabei kann der durch den Deckel, den Faltenbalg und den Boden gebildete Raum entweder das Reservoir für das druckbeaufschlagte Hydraulikfluid sein, oder der Raum für das drucklose Hydraulikfluid. Dies ist abhängig von der Beschaltung und von den zuund wegführenden Leitungen.

Weitere Abwandlungen, Ergänzungen und Ausgestaltungen der vorliegenden Erfindung werden anhand der nachstehenden Beschreibung der Figuren erläutert.
- Fig. 1: zeigt schematisch den hydraulischen Schaltplan des relevanten Teils einer Kraftfahrzeugbremsanlage, in der die erfindungsgemäße hydraulische Ansteuereinheit eingesetzt ist.
- Fig. 2: zeigt eine erste Ausgestaltung der erfindungsgemäßen hydraulischen Ansteuereinheit in einer schematischen Schnittansicht.
- Fig. 3: zeigt eine zweite Ausgestaltung einer hydraulischen Ansteuereinheit gemäß der Erfindung in einer schematischen Schnittansicht.
- Fig. 4: zeigt eine dritte Ausgestaltung einer hydraulischen Ansteuereinheit gemäß der Erfindung in einer schematischen Schnittansicht.
- Fig. 5: zeigt eine vierte Ausgestaltung einer hydraulischen Ansteuereinheit gemäß der Erfindung in einer schematischen Schnittansicht.

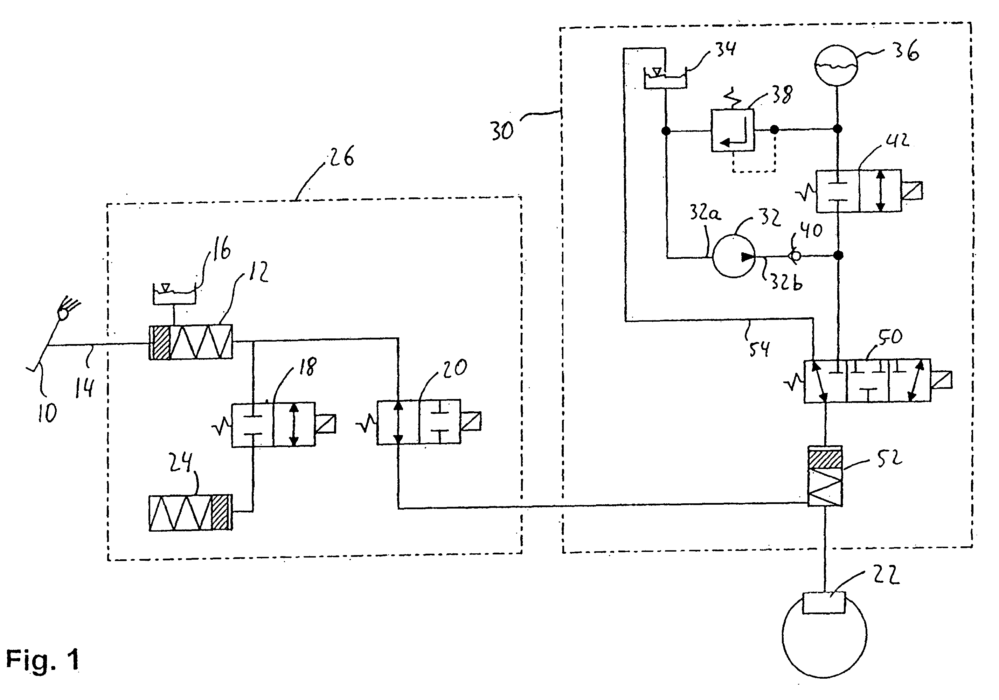

Fig. 1 zeigt schematisch eine elektronisch gesteuerte hydraulische Fahrzeugbremsanlage. Diese Fahrzeugbremsanlage weist ein Bremspedal 10 auf, das mit einem Hauptbremszylinder über eine Betätigungsstange 14 gekoppelt ist. Der Hauptbremszylinder 12 ist mit einem drucklosen Reservoir 16 für Hydraulikfluid verbunden. An den Ausgang des Hauptbremszylinders 12 schließen sich zwei elektronisch gesteuerte Ventilanordnungen 18 und 20 an. Dabei stellt die eine Ventilanordnung 20 in ihrer unbetätigten Grundstellung eine Verbindung zu einer Bremseinrichtung 22 eines Fahrzeugrades her. In ihrer elektronisch angesteuerten betätigten Stellung sperrt diese Ventilanordnung 20 die Verbindung zwischen dem Hauptbremszylinder 12 und der Bremseinrichtung 22.

Mit dem Hauptbremszylinder 12 ist über die andere Ventilanordnung 18 in deren elektronisch betätigter Stellung der Hauptbremszylinder 12 mit einer Zylinderkolbenanordnung 24 zur Simulation des Brempedalverhaltens verbunden. In der unbetätigten Grundstellung der Ventilanordnung 18 ist die Verbindung zwischen dem Hauptbremszylinder 12 und der Zylinderkolbenanordnung 24 zur Simulation des Bremspedalverhaltens gesperrt. Die vorstehend beschriebene Betätigungs- und Simulationseinheit 26 dient insbesondere für sogenannte Brake-by-Wire-Fahrzeugbremsanlagen, wie sie z.B. aus der DE 43 43 386 A1 bekannt sind. Allerdings hat diese Anordnung den Nachteil, daß das dem Fahrer dargebotene Bremspedalgefühl und das für den Fahrer erlebbare Verhalten des Bremspedals nur unzureichend dem aus herkömmlichen Fahrzeugen bekannten entspricht. Da es für die vorliegende Erfindung jedoch nicht in erster Linie auf die Betätigungs- und Simulationseinheit 26 ankommt, ist auf die Beschreibung einer Charakteristikmodellier-Einrichtung nachstehend verzichtet.

Die erfindungsgemäße hydraulische Ansteuereinheit der Kraftfahrzeugbremsanlage ist in Fig. 1 der mit dem Bezugszeichen 30 versehene strich-punktiert umrandete Teil.

Die hydraulische Ansteuereinheit 30 enthält eine durch eine (nicht gezeigte) elektronische Steuereinheit ansteuerbare unter Druck stehendes Hydraulikfluid liefernde Pumpe 32, die im Brake-by-Wire-Betriebsmodus der Kraftfahrzeuganlage unter Druck stehendes Hydraulikfluid für die Bremseinrichtung 22 bereitstellt. Der Pumpe 32 ist an ihrer Eingangsseite 32a ein erstes Reservoir 34 für druckloses Hydraulikfluid und an ihrer Ausgangsseite 32b ein zweites Reservoir 36 für unter Druck stehendes Hydraulikfluid zugeordnet. Die Pumpe 32, das erste und das zweite Reservoir 34, 36 sind in einem gemeinsamen Gehäuse angeordnet und bilden eine integrierte elektro-hydraulische Baueinheit, wie dies weiter unter noch im Detail erläutert ist.

Zwischen dem drucklosen Reservoir 34 und dem Reservoir für unter Druck stehendes Hydraulikfluid 36 ist parallel zu der Pumpe 32 ein druckgesteuertes Überdruckventil 38 angeordnet, das bei einem vorbestimmten ersten Druckniveau in dem unter Druck stehenden Reservoir 36 eine fluidleitende Verbindung von dem unter Druck stehenden Reservoir 36 zu dem drucklosen Reservoir 34 herstellt und bei einem vorbestimmten zweiten Druckniveau in dem unter Druck stehenden Reservoir 36 die fluidleitende Verbindung von dem unter Druck stehenden Reservoir 36 zu dem drucklosen Reservoir 34 unterbricht. An der Ausgangsseite 32b der Pumpe 32 ist ein Rückschlagventil 40 angeordnet. An der Auslaßseite des Rückschlagventils 40 ist in der Verbindungsleitung zu dem Überdruckventil 38 bzw. dem zweiten Reservoir 36 für unter Druck stehendes Hydraulikfluid eine in ihrer unbetätigten Grundstellung gesperrte elektromagnetisch betätigbare Ventilanordnung 42 angeordnet, die in ihrer betätigten Stellung die Verbindung von der Pumpe 32 zu dem zweiten Reservoir 36 herstellt.

Von der Ausgangsseite des Rückschlagventils 40 führt eine Verbindungsleitung zu einem ebenfalls durch die (nicht gezeigte) elektronische Steuereinheit betätigbaren 3-Stellungs-Steuerventil 50 mit drei Anschlüssen. Je nach Stellung des Steuerventils 50 wird ein diesem nachgeschalteter sogenannter Trennzylinder 52 entweder mit unter Druck stehendem Hydraulikfluid beaufschlagt, der in dem Trennzylinder 52 enthaltene Hydraulikdruck gehalten oder in das drucklose Reservoir 34 über eine separate Leitung 54 abgelassen. Durch den Trennzylinder 52 wird eine hydraulische Entkopplung zwischen dem Hydraulikdruck aus der hydraulischen Ansteuereinheit 30 und dem Hydraulikdruck der Betätigungs- und Simulationseinheit 26 erreicht.

Für weitere Details der Funktion der in Fig. 1 gezeigten Fahrzeugbremsanlage sei auf die DE 196 16 538 A1 verwiesen.

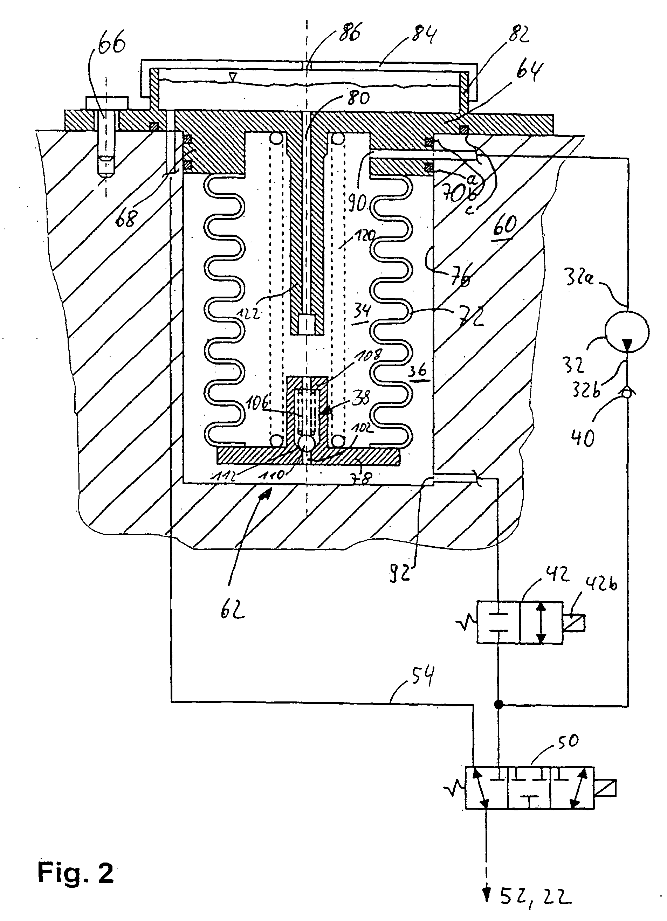

Fig. 2 zeigt eine erste Ausführungsform der hydraulischen Ansteuereinheit gemäß der Erfindung, bei der die Pumpe 32, das erste und das zweite Reservoir 34, 36 in einem gemeinsamen Gehäuse als elektrohydraulische Baueinheit integriert sind. Ersichtlich ist in einem metallischen Gehäuseblock 60 eine kreiszylindrische Ausnehmung 62 ausgebildet, die mit einem Deckel 64 fluiddicht verschlossen ist. Dazu weist der Deckel 64 einen Bund 68 auf, der formschlüssig in die Ausnehmung 62 eingreift. Außerdem ist der Deckel 64 mit dem Gehäuse 60 mit mehreren Schrauben 66 verschraubt. Überdies sind mehrere O-Ring-Dichtungen 70a, 70b und 70c in entsprechende Nuten in dem Deckel angeordnet. An der der Ausnehmung 62 zugewandten Seite des Dekkels ist ein Faltenbalg 72 aus Stahl angeschweißt, der einen geringeren Durchmesser als die Ausnehmung 62 aufweist, so daß zwischen der Außenseite des Faltenbalges 72 und der zylindrischen Wand 76 der Ausnehmung 62 ein äußerer Bereich gebildet ist, welcher bei der Ausführungsform gemäß Fig. 2 das zweite Reservoir 36 für unter Druck stehendes Hydraulikfluid bildet. An dem dem Deckel 64 gegenüberliegenden Ende des Faltenbalges 72 ist ein Boden 78 angeschweißt, so daß der durch den Deckel 64, den Faltenbalg 72 und den Boden 78 gebildete innere Bereich das erste Reservoir 34 für druckloses Hydraulikfluid bildet. Dazu ist in dem Deckel 64 eine mittig angeordnete axiale Öffnung 80 vorgesehen, die von dem das erste Reservoir 34 bildenden Bereich nach außen reicht und damit das erste Reservoir 34 mit einem an der Außenseite des Deckels angeformten Überlaufgefäß 82 verbindet. Das Überlaufgefäß 82 ist durch einen an dem Deckel 64 einstückig angeformten ringförmigen Steg 82 gebildet, welcher durch eine Kappe 84, in der eine Öffnung 86 zur Atmosphäre hin ausgebildet ist, verschlossen ist.

In dem Bund 68 des Deckels 64 ist eine radial verlaufende zweite, in den das drucklose Reservoir 34 bildenden ersten Bereich reichende Öffnung 90 angeordnet, die das drucklose Reservoir 34 mit der Eingangsseite 32a der Pumpe 32 verbindet. Im Bereich des Grundes der Ausnehmung 62 mündet eine dritte, in den das unter Druck stehende Hydraulikfluid enthaltende zweite Reservoir 36 reichende Öffnung 92, die das zweite Reservoir 36 mit der Ausgangsseite 32b der Pumpe 32 verbindet. Zwischen der dritten Öffnung 92 und der Ausgangsseite 32b der Pumpe 32 ist dabei in Übereinstimmung mit dem Hydraulikschaltplan von Fig. 1 das Umschaltventil bzw. die Ventilanordnung 42 und das Rückschlagventil 40 angeordnet. Vorzugsweise ist auch diese Ventilanordnung 42 in das Gehäuse 60 in der Weise integriert, daß beispielsweise in einer Bohrung in dem das Gehäuse 60 bildenden Metallblock ein durch einen Elektromagnet 42b angesteuertes Ventilglied hin- und herbewegbar ist.

An der Verbindungsleitung zwischen der Ventilanordnung 42 und dem Rückschlagventil 40 ist eine Abzweigung zu dem 3/3-Wege-Steuerventil 50 angeordnet (siehe auch Fig. 1). Auch dieses Steuerventil 50 ist in gleicher Weise wie die Ventilanordnung 42 in das Gehäuse 60 baueinheitlich integriert.

In dem Boden 78 ist mittig eine Hydraulikfluidleitung 102 zwischen dem drucklosen Reservoir 34 und dem unter Druck stehenden Reservoir 36 angeordnet. In der Hydraulikfluidleitung 102 befindet sich ein Überdruckventil 38, das durch eine Schraubenfeder 106 gebildet ist, die sich an einem Ringbund 108 abstützt und ein kugelförmiges Ventilelement 110 gegen einen Ventilsitz 112 preßt. Dabei ist das Überdruckventil 38 so orientiert, daß bei einem vorbestimmten ersten Druckniveau in dem unter Druck stehenden Reservoir 36 eine fluidleitende Verbindung von dem Bereich 36 zu dem drucklosen Reservoir 34 hergestellt bzw. unterbrochen wird, wenn dieses Druckniveau unterschritten wird. Parallel wirkend zu dem ersten Teil der Federanordnung in Gestalt des Faltenbalges 72 ist ein zweiter Teil der Federanordnung in Gestalt einer Schraubenfeder 120 angeordnet, der die Wirkung des Faltenbalges 72 unterstützt. In der Ausführungsform gemäß Fig. 2 ist dabei der zweite Teil der Federanordnung eine als Druckfeder ausgebildete Schraubenfeder 120, die zwischen dem Boden 78 und dem Deckel 64 eingespannt ist.

Durch ein stabförmiges Anschlagglied 122, das im Inneren des drucklosen Reservoirs 34 koaxial zu der Schraubenfeder 120 bzw. dem Faltenbalg 72 angeordnet ist, wird die maximale Expansion des Reservoirs 36 für unter Druck stehendes Hydraulikfluid begrenzt. Wenn das Anschlagglied 122 auf den Fortsatz des Deckels 78 trifft, in dem sich das Überdruckventil 38 befindet, ist die maximale Expansion des unter Druck stehenden Reservoirs 36 erreicht.

Bei einem Befüllen bzw. unter Druck setzen des Reservoirs 36 mit Hydraulikfluid wird der Faltenbalg zusammengedrückt, so daß sich der Boden 78 auf das Anschlagglied 122 zu bewegt. Dadurch verhält sich der Weg, um den der Faltenbalg zusammengedrückt wird, proportional zu dem in der Druckkammer (Reservoir 36) bereitgestellten Druck. Diese Eigenschaft läßt sich durch die Proportionalität des in der Druckkammer herrschenden Druckes zu dem Weg des Bodens 78 dazu ausnützen, auf einfache und kostengünstige Weise den Druck in der Druckkammer mittels eines Wegsensors zu erfassen, so daß ein üblicherweise verwendeter kostspieliger Drucksensor eingespart werden kann.

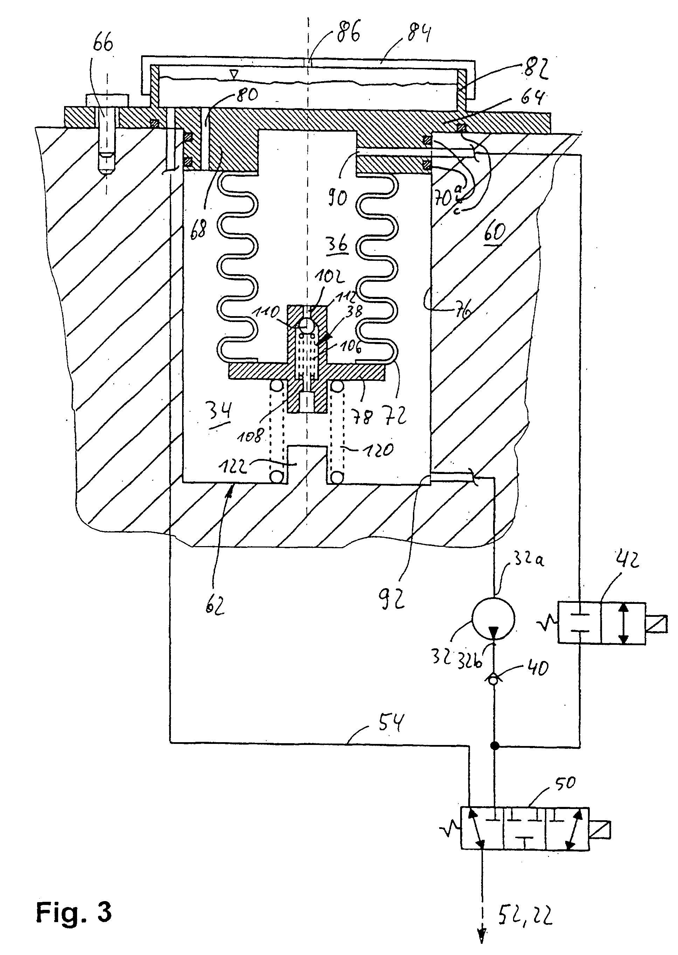

Fig. 3 zeigt eine alternative Ausführungsform zu Fig. 2, wobei sich das drucklose Reservoir 34 außerhalb des Faltenbalges 72 und das unter Druck stehendes Hydraulikfluid enthaltende Reservoir 36 innerhalb des Faltenbalges 72 befindet. Dadurch wird bei einem Befüllen bzw. unter Druck setzen des zweiten Reservoirs 36 der Faltenbalg 72 und die Schraubenfeder 120 nicht wie bei Fig. 2 in Längsrichtung komprimiert, sonder expandiert. Daher sind auch der Anschlag zur Druckbegrenzung 122, die Schraubenfeder 120, welche auch zur Einstellung der Vorspannkraft dienen kann, sowie die Druchlaßrichtung des Druckbegrenzungsventils 38 im Vergleich zu Fig. 2 verändert. Im übrigen sind die Ausführungsformen gemäß Fig. 2 und Fig. 3 funktional identisch.

Bei einer Ausgestaltung der hydraulischen Ansteuereinheit in der Weise, daß auch die Betätigungs- und Simulationseinrichtung 26 im gleichen Gehäuseblock baulich integriert ist, kann das Reservoir 16 der Betätigungs- und Simulationseinheit 26 mit dem Reservoir 34 der hydraulischen Ansteuereinheit 30 identisch sein. Dies bewirkt eine zusätzliche Einsparung von Raum und Gewicht.

Die durch den Deckel 64, den Faltenbalg 72 und den Boden 78 (mit dem Überdruckventil 38) gebildete separat handhabbare Baugruppe, der ggf. auch noch die Schraubenfeder 120 zugeordnet sein kann, ist auch für den Aufbau einer Hydraulikspeicherbatterie geeignet, bei der in einem Metallblock eine oder mehrere Ausnehmungen 62 vorgesehen sind, in die die vorstehend beschriebene Baugruppe eingesetzt wird. Ein entscheidender Vorteil ist dabei der minimale Platzbedarf, der sich dadurch ergibt, daß der je nach Ausführungsform innerhalb oder außerhalb des Faltenbalges liegende drucklose Bereich als Reservoir für Hydraulikfluid dient. Für spezielle Anwendungen mag es nicht einmal erforderlich sein, direkt bei den beiden Reservoirs 34, 36 die Pumpe 32 in dem Gehäuseblock, in dem die Ausnehmungen 62 ausgeformt ist, vorzusehen.

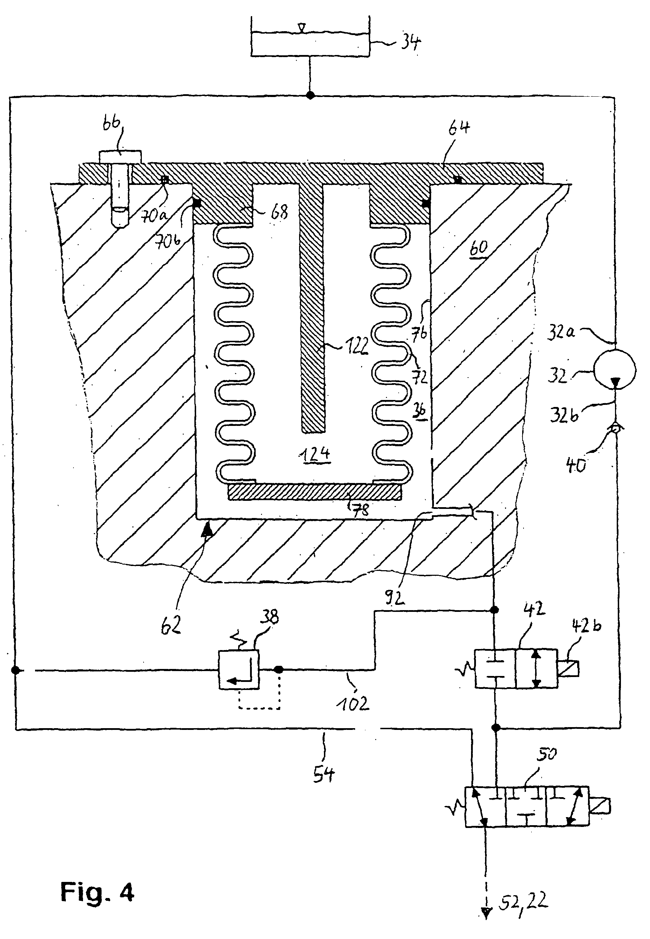

Fig. 4 zeigt eine alternative Ausführungsform zu Fig. 2, wobei die Pumpe 32, das erste und das zweite Reservoir 34, 36 wieder-um in einem gemeinsamen Gehäuse als elektrohydraulische Baueinheit integriert sind.

Im metallischen Gehäuseblock 60 ist die Ausnehmung 62 ausgebildet, die mit dem Deckel 64 fluiddicht verschlossen ist. Dazu weist der Deckel 64 den Bund 68 auf, in dem zwei O-Ring-Dichtungen 70a und 70b in entsprechenden Nuten angeordnet sind. Am Bund 68 ist der Faltenbalg 72 angeschweißt, der die Ausnehmung 62 in den äußeren Bereich, der das zweite Reservoir 36 bildet, und einen inneren Bereich 124 unterteilt, der mit einem Gas gefüllt ist. An dem dem Deckel 64 gegenüberliegenden Ende des Faltenbalges 72 ist der Boden 78 angeschweißt.

Im Bereich des Grundes der Ausnehmung 62 mündet die Öffnung 92, die in das zweite Reservoir 36 reicht und dieses mit der Ausgangsseite 32b der Pumpe 32 verbindet. Zwischen der Öffnung 92 und der Ausgangsseite 32b der Pumpe 32 ist dabei die Ventilanordnung 42 und das Rückschlagventil 40 angeordnet. An der Verbindungsleitung zwischen der Ventilanordnung 42 und dem Rückschlagventil 40 ist die Abzweigung zu dem 3/3-Wege-Steuerventil 50 angeordnet (siehe auch Fig. 2).

Das erste Reservoir 34 ist im Gehäuseblock 60 mittels eines Überlaufgefäßes ausgebildet. Das drucklose Reservoir 34 ist mit der Eingangsseite 32a der Pumpe 32 verbunden.

In der Hydraulikleitung 102 zwischen dem Reservoir 36 bzw. der Öffnung 92 und dem Reservoir 34 ist das Überdruckventil 38 an einer separaten Stelle im Gehäuseblock 62 angeordnet.

Das Gas im Bereich 124 wirkt in gleicher Weise wie die Schraubenfeder 120 in Fig. 2 parallel zu dem Faltenbaig 72 und unterstützt dessen Wirkung. Durch das stabförmige Anschlagglied 122 im Inneren des Bereichs 124, wird die maximale Expansion des Reservoirs 36 begrenzt.

Bei einem Befüllen bzw. unter Druck setzen des Reservoirs 36 mit Hydraulikfluid wird der Faltenbalg 72 und das im Bereich 124 eingeschlossene Gas zusammengedrückt, wobei sich der Weg, um den der Faltenbalg 72 zusammengedrückt wird, proportional zu dem im Reservoir 36 bereitgestellten Druck verhält.

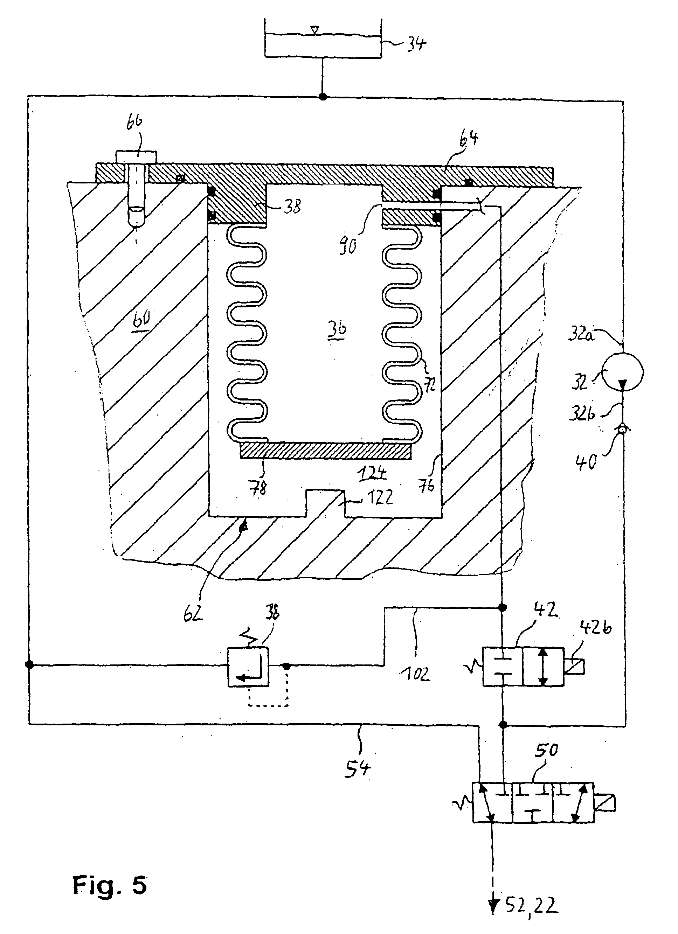

Fig. 5 zeigt eine alternative Ausführungsform zu Fig. 3, wobei sich der mit Gas gefüllte Bereich 124 außerhalb des Faltenbalges 72 und das Reservoir 36 innerhalb des Faltenbalges 72 befindet. Dabei ist der Anschlag zur Druckbegrenzung 122 analog zu Fig. 3 und das Druckbegrenzungsventil 38 analog zu Fig. 4 verändert. Im übrigen sind die Ausführungsformen gemäß Fig. 4 und Fig. 5 funktional identisch, wobei Teillösungen der Ausführungsformen, wie beispielsweise die Anordnung des Reservoirs 34 im Bereich 124 miteinander kombinierbar sind.

## Patentansprüche

1. Hydraulische Ansteuereinheit für eine Kraftfahrzeugbremsanlage, mit
- einer durch eine elektronische Steuereinheit (ECU) ansteuerbaren unter Druck stehendes Hydraulikfluid liefernden Pumpe (32), die das Hydraulikfluid für wenigstens eine mit einem Fahrzeugrad gekoppelten Bremseinrichtung (22) bereitstellt,
- einem ersten Reservoir (34) für druckloses Hydraulikfluid, das der Pumpe (32) eingangsseitig zugeordnet ist, und
- einem zweiten Reservoir (36) für unter Druck stehendes Hydraulikfluid, das der Pumpe (32) ausgangsseitig zugeordnet ist, wobei
- die Pumpe (32), das erste (34) und das zweite (36) Reservoir in einem gemeinsamen Gehäuse (60) als elektrohydraulische Baueinheit integriert angeordnet sind,
**dadurch gekennzeichnet, daß**
- das zweite Reservoir (36) ein Hydraulikdruckspeicher ist, in den das Hydraulikfluid durch die Pumpe (32) gegen die Kraft einer Federanordnung (72) hineinförderbar ist, wobei zumindest ein erster Teil der Federanordnung (72) durch einen Faltenbalg, vorzugsweise aus Metall, gebildet ist.

2. Hydraulische Ansteuereinheit nach Anspruch 1, **dadurch gekennzeichnet, daß**
- eine Wandung des das zweite Reservoir (36) bildenden Hydraulikdruckspeichers (36) zumindest teilweise durch eine Ausnehmung (62) in dem Gehäuse (60) gebildet ist.

3. Hydraulische Ansteuereinheit nach Anspruch 2, **dadurch gekennzeichnet, daß**
- der Faltenbalg (72) die Ausnehmung (62) in dem Gehäuse (60) in zwei Bereiche teilt, von denen ein erster, innerer oder äußerer Bereich (124) mit Gas gefüllt ist und ein zweiter, äußerer oder innerer Bereich das zweite Reservoir (36) für unter Druck stehendes Hydraulikfluid bildet.

4. Hydraulische Ansteuereinheit nach Anspruch 2, **dadurch gekennzeichnet, daß**
- der Faltenbalg (72) die Ausnehmung (62) in dem Gehäuse (60) in zwei Bereiche teilt, von denen ein erster, innerer oder äuβerer Bereich das erste Reservoir für druckloses Hydraulikfluid und ein zweiter, äußerer oder innerer Bereich das zweite Reservoir (36) für unter Druck stehendes Hydraulikfluid bildet.

5. Hydraulische Ansteuereinheit nach Anspruch 2, 3 oder 4, **dadurch gekennzeichnet, daß**
- der Faltenbalg (72) an einem ersten Ende mit einem Deckel (64) verbunden ist, der die Ausnehmung (62) in dem Gehäuse (60) verschließt, und an einem zweiten Ende mit einem Boden (78) verbunden ist.

6. Hydraulische Ansteuereinheit nach Anspruch 5, **dadurch gekennzeichnet, daß**
- in dem Deckel (64) eine erste in das erste Reservoir (34) reichende Öffnung (80) angeordnet ist, die dieses mit einem Überlaufgefäß (82) verbindet.

7. Hydraulische Ansteuereinheit nach Anspruch 5 oder 6, **dadurch gekennzeichnet, daß**
- in dem Deckel (64) eine zweite, in das erste Reservoir (34) reichende Öffnung (90) angeordnet ist, die dieses mit der Eingangsseite (32a) der Pumpe (32) verbindet.

8. Hydraulische Ansteuereinheit nach einem der Ansprüche 2 bis 7, **dadurch gekennzeichnet, daß**
- in der Wandung der Ausnehmung (62) eine dritte, in das zweite Reservoir (36) reichende Öffnung (92) angeordnet ist, die dieses mit der Ausgangsseite (32b) der Pumpe (32) verbindet.

9. Hydraulische Ansteuereinheit nach Anspruch 8, **dadurch gekennzeichnet, daß**
- zwischen der dritten, in das zweite Reservoir (36) reichenden Öffnung (92) und der Ausgangsseite (32b) der Pumpe (32) eieine steuerbare Ventilanordnung (42) angeordnet ist.

10. Hydraulische Ansteuereinheit nach einem der vorherigen Ansprüche, **dadurch gekennzeichnet, daß**
- eine Hydraulikfluidleitung (102) zwischen dem drucklosen (34) und dem unter Druck stehenden Reservoir (36), insbesondere in dem Boden (78), angeordnet ist, in der sich ein Überdruckventil (38) befindet, das bei einem vorbestimmten ersten Druckniveau indem unter Druck stehenden Reservoir (36) eine fluidleitende Verbindung von dem unter Druck stehenden Reservoir (36) zu dem drucklosen Reservoir (34) herstellt und bei einem vorbestiromten zweiten Druckniveau in dem unter Druck stehenden Reservoir (36) die fluidleitende Verbindung von dem unter Druck stehenden Reservoir (36) zu dem drucklosen Reservoir (34') unterbricht.

11. Hydraulische Ansteuereinheit nach einem der vorherigen Ansprüche, **dadurch gekennzeichnet, daß**
- parallel zu dem ersten Teil der Federanordnung (72) ein zweiter Teil der Federanordnung (120, 124) angeordnet ist, der die Wirkung des ersten Teils der Federanordnung (72) unterstützt.

12. Hydraulische Ansteuereinheit nach dem vorherigen Anspruch, soweit dieser auf Anspruch 5 rückbezogen ist, **dadurch gekennzeichnet, daß**
- der zweite Teil der Federanordnung eine als Druckfeder ausgebildete Schraubenfeder (120) ist, die zwischen dem Boden (78) und dem Deckel (64) angeordnet ist.

13. Hydraulische Ansteuereinheit nach Anspruch 11, soweit dieser auf Anspruch 5 rückbezogen ist, **dadurch gekennzeichnet, daß**
- der zweite Teil der Federanordnung (72) eine als Zugfeder ausgebildete Schraubenfeder ist, die zwischen dem Boden (78) und der Wandung (76) der Ausnehmung (62) angeordnet ist.

14. Hydraulische Ansteuereinheit nach einem der vorherigen Ansprüche, **dadurch gekennzeichnet, daß**
- die maximale Expansion des Reservoirs (36) für unter Druck stehendes Hydraulikfluid durch ein Anschlagglied (122) begrenzt

15. Hydraulische Ansteuereinheit nach einem der vorherigen Ansprüche, **dadurch gekennzeichnet, daß**
- die Pumpe (32) mit einem von der elektronischen Steuereinheit (ECU) angesteuerten Elektromotor getrieblich gekoppelt ist.

## Claims

1. A hydraulic control unit for a motor-vehicle braking system, comprising
- a pump (32) delivering hydraulic fluid under pressure, said pump being capable of being controlled by an electronic control unit (ECU) and supplying the hydraulic fluid for at least one braking device (22) which is coupled to a wheel of the vehicle,
- a first reservoir (34) for pressureless hydraulic fluid, which is assigned to the pump (32) on the input side, and
- a second reservoir (36) for hydraulic fluid under pressure, which is assigned to the pump (32) on the output side, wherein
- the pump (32), the first reservoir (34) and the second reservoir (36) are arranged in a common casing (60), integrated as an electrohydraulic modular unit, **characterised in that**
- the second reservoir (36) is a hydraulic pressure accumulator, into which the hydraulic fluid is capable of being conveyed by the pump (32) contrary to the force of a spring arrangement (72), wherein at least a first part of the spring arrangement (72) is formed by a corrugated bellows preferably made of metal.

2. Hydraulic control unit according to Claim 1, **characterised in that**
- one wall of the hydraulic pressure accumulator (36) constituting the second reservoir (36) is formed at least partially by a recess (62) in the casing (60).

3. Hydraulic control unit according to Claim 2, **characterised in that**
- the corrugated bellows (72) divides the recess (62) in the casing (60) into two regions, of which a first, inner or outer region (124) is filled with gas and a second, outer or inner region forms the second reservoir (36) for hydraulic fluid under pressure.

4. Hydraulic control unit according to Claim 2, **characterised in that**
- the corrugated bellows (72) divides the recess (62) in the casing (60) into two regions, of which a first, inner or outer region forms the first reservoir for pressureless hydraulic fluid and a second, outer or inner region forms the second reservoir (36) for hydraulic fluid under pressure.

5. Hydraulic control unit according to Claim 2, 3 or 4, **characterised in that**
- the corrugated bellows (72) is connected at a first end to a cover (64) which seals the recess (62) in the casing (60) and is connected at a second end to a base (78).

6. Hydraulic control unit according to Claim 5, **characterised in that**
- a first aperture (80) extending into the first reservoir (34) is arranged in the cover (64), said first aperture connecting said first reservoir to an overflow vessel (82).

7. Hydraulic control unit according to Claim 5 or 6, **characterised in that**
- a second aperture (90) extending into the first reservoir (34) is arranged in the cover (64), said second aperture connecting said first reservoir to the input side (32a) of the pump (32).

8. Hydraulic control unit according to one of Claims 2 to 7, **characterised in that**
- a third aperture (92) extending into the second reservoir (36) is arranged in the wall of the recess (62), said third aperture connecting said second reservoir to the output side (32b) of the pump (32).

9. Hydraulic control unit according to Claim 8, **characterised in that**
- a controllable valve arrangement (42) is arranged between the third aperture (92) extending into the second reservoir (36) and the output side (32b) of the pump (32).

10. Hydraulic control unit according to one of the preceding claims, **characterised in that**
- a hydraulic-fluid line (102) is arranged between the pressureless reservoir (34) and the reservoir (36) under pressure, preferably in the base (78), in which a pressure-relief valve (38) is located which given a predetermined first pressure level in the reservoir (36) under pressure establishes a fluid-conducting connection from the reservoir (36) under pressure to the pressureless reservoir (34) and given a predetermined second pressure level in the reservoir (36) under pressure interrupts the fluid-conducting connection from the reservoir (36) under pressure to the pressureless reservoir (34).

11. Hydraulic control unit according to one of the preceding claims, **characterised in that**
- parallel to the first part of the spring arrangement (72) a second part of the spring arrangement (120, 124) is arranged which assists the action of the first part of the spring arrangement (72).

12. Hydraulic control unit according to the preceding claim, to the extent that the latter is referred back to Claim 5, **characterised in that**
- the second part of the spring arrangement is a helical spring (120) taking the form of a compression spring which is arranged between the base (78) and the cover (64).

13. Hydraulic control unit according to Claim 11, to the extent that the latter is referred back to Claim 5, **characterised in that**
- the second part of the spring arrangement (72) is a helical spring taking the form of a tension spring which is arranged between the base (78) and the wall (76) of the recess (62).

14. Hydraulic control unit according to one of the preceding claims, **characterised in that**
- the maximal expansion of the reservoir (36) for hydraulic fluid under pressure is limited by a stop member (122).

15. Hydraulic control unit according to one of the preceding claims, **characterised in that**
- the pump (32) is coupled by a transmission to an electric motor which is controlled by the electronic control unit (ECU).

## Revendications

1. Unité de commande d'amorçage hydraulique pour un système de freinage de véhicule automobile, avec
- une pompe (32) pouvant être amorcée par une unité de commande électronique (ECU) et fournissant un fluide hydraulique sous pression, pompe qui alimente en fluide hydraulique au moins un dispositif de freinage (22) couplé avec une roue du véhicule,
- un premier réservoir (34) de fluide hydraulique non pressurisé qui est associé à la pompe (32) du côté entrée, et
- un second réservoir (36) de fluide hydraulique sous pression qui est associé à la pompe (32) du côté sortie,
- la pompe (32), le premier (34) et le second réservoir (36) étant disposés dans un boîtier commun (60) intégré sous la forme d'une unité modulaire électro-hydraulique,
**caractérisée en ce que**
- le second réservoir (36) est un accumulateur de pression hydraulique dans lequel le fluide hydraulique peut être injecté par la pompe (32) contre la force d'un dispositif à ressort (72), au moins une première partie du dispositif à ressort (72) étant constituée par un soufflet, de préférence en métal.

2. Unité de commande d'amorçage hydraulique selon la revendication 1, **caractérisée en ce que**
- une paroi de l'accumulateur de pression hydraulique (36) constituant le second réservoir (36) est constituée au moins partiellement par un évidement (62) dans le boîtier (60).

3. Unité de commande d'amorçage hydraulique selon la revendication 2, **caractérisée en ce que**
- le soufflet (72) divise l'évidement (62) dans le boîtier (60) en deux zones, une première zone (124) intérieure ou extérieure étant remplie de gaz et une seconde zone extérieure ou intérieure constituant le second réservoir (36) pour le fluide hydraulique sous pression.

4. Unité de commande d'amorçage hydraulique selon la revendication 2, **caractérisée en ce que**
- le soufflet (72) divise l'évidement (62) dans le boîtier (60) en deux zones, une première zone intérieure ou extérieure constituant le premier réservoir pour le fluide hydraulique non pressurisé et une seconde zone extérieure ou intérieure constituant le second réservoir (36) pour le fluide hydraulique sous pression.

5. Unité de commande d'amorçage hydraulique selon l'une des revendications 2, 3 ou 4, **caractérisée en ce que**
- le soufflet (72) est relié à une première extrémité avec le couvercle (64) qui obture l'évidement (62) dans le boîtier (60), et est relié à une seconde extrémité par un fond (78).

6. Unité de commande d'amorçage hydraulique selon la revendication 5, **caractérisée en ce que**
- dans le couvercle (64) est disposée une première ouverture (80) donnant dans le premier réservoir (34) et qui relie celui-ci avec un réservoir de trop-plein (82).

7. Unité de commande d'amorçage hydraulique selon la revendication 5 ou 6, **caractérisée en ce que**
- dans le couvercle (64) est disposée une deuxième ouverture (90) donnant dans le premier réservoir (34) et qui relie celui-ci avec le côté entrée (32a) de la pompe (32).

8. Unité de commande d'amorçage hydraulique selon une des revendications 2 à 7, **caractérisée en ce que**
- dans la paroi de l'évidement (62) est disposée une troisième ouverture (92) donnant dans le second réservoir (36) et qui relie celui-ci avec le côté sortie (32b) de la pompe (32).

9. Unité de commande d'amorçage hydraulique selon la revendication 8, **caractérisée en ce que**
- entre la troisième ouverture (92) donnant dans le second réservoir (36) et le côté sortie (32b) de la pompe (32) est disposé un dispositif de soupape (42) commandable.

10. Unité de commande d'amorçage hydraulique selon une des revendications précédentes, **caractérisée en ce que**
- entre le réservoir non pressurisé (34) et le réservoir sous pression (36), en particulier dans le fond (78), est disposée une conduite de fluide hydraulique (102) dans laquelle se trouve une soupape de surpression (38) qui, à un premier niveau de pression prédéfini dans le réservoir sous pression (36), établit une liaison de conduite de fluide du réservoir sous pression (36) vers le réservoir non pressurisé (34) et, à un second niveau de pression prédéfini dans le réservoir sous pression (36), interrompt la liaison de conduite de fluide du réservoir sous pression (36) vers le réservoir non pressurisé (34).

11. Unité de commande d'amorçage hydraulique selon une des revendications précédentes, **caractérisée en ce que**
- parallèlement à la première partie du dispositif à ressort (72) est disposée une seconde partie du dispositif à ressort (120, 124) qui soutient l'effet de la première partie du dispositif à ressort (72).

12. Unité de commande d'amorçage hydraulique selon la revendication précédente, dans la mesure où celle-ci se rapporte à la revendication 5, **caractérisée en ce que**
- la seconde partie du dispositif à ressort est un ressort à boudin (120) conformé comme un ressort de pression qui est disposé entre le fond (78) et le couvercle (64).

13. Unité de commande d'amorçage hydraulique selon la revendication 11, dans la mesure où celle-ci se rapporte à la revendication 5, **caractérisée en ce que**
- la seconde partie du dispositif à ressort (72) est un ressort à boudin conformé comme un ressort de traction qui est disposé entre le fond (78) et la paroi (76) de l'évidement (62).

14. Unité de commande d'amorçage hydraulique selon une des revendications précédentes, **caractérisée en ce que**
- l'expansion maximale du réservoir (36) pour le fluide hydraulique sous pression est limitée par un élément de butée (122).

15. Unité de commande d'amorçage hydraulique selon une des revendications précédentes, **caractérisée en ce que**
- la pompe (32) est couplée en entraînement avec un moteur électrique amorcé par l'unité de commande électronique (ECU).
